# EUROPEAN PATENT SPECIFICATION

(11) **EP 1 799 376 B1**
(45) Date of publication and mention of the grant of the patent: **11.03.2009**
(21) Application number: 05786936.4
(22) Date of filing: 19.08.2005
(51) Int. Cl.: B21D 53/20

(54) **ANNULAR DISC OF BENT SHEET MATERIAL**
RINGSCHEIBE AUS GEBOGENEM BANDMATERIAL
DISQUE ANNULAIRE CONSTITUE D'UN MATERIAU EN FEUILLE CINTRE

(30) Priority: 19.08.2004 DE 102004040311
(43) Date of publication of application: 27.06.2007
(73) Proprietor: Umicore AG & Co. KG, 63457 Hanau (DE); ABB Technology AG, 8050 Zurich (CH)
(72) Inventor: GENTSCH, Dietmar, 40878 Ratingen (DE); PTASCHEK, Georg, 61200 Melbach (DE)
(74) Representative: Vossius & Partner
(86) International application number: PCT/EP2005/008998
(87) International publication number: WO 2006/018313

(56) References cited:
- EP-A- 0 823 566
- GB-A- 1 585 733
- US-A- 3 021 593
- PATENT ABSTRACTS OF JAPAN vol. 2003, no. 12, 5 December 2003 (2003-12-05) -& JP 2004 202499 A (JFE STEEL KK), 22 July 2004 (2004-07-22)
- PATENT ABSTRACTS OF JAPAN vol. 1999, no. 05, 31 May 1999 (1999-05-31) -& JP 11 047976 A (TOPY IND LTD), 23 February 1999 (1999-02-23)

## Description

The present invention relates to an annular disc of bent sheet material and to a method for producing it.

It is known to produce annular discs by punching out the desired form from a wide sheet. With this punching method, however, only a small part of the sheet used is processed into annular discs. For instance, in industrially customary methods, generally only between 10% and 40% of the sheet used is actually processed into annular discs. The rest remains as scrap and must be reprocessed into sheet before possible reuse, with the great effort and costs that involves. Therefore, methods in which a greater part of the material used is processed into the annular discs are desired.

JP-A-11 047 976 discloses an annular disc of solder material without junction. JP-A-2004 202499 and EP-A-0 823 566 describe the procedure of bending a strip and joining together the free ends to form an annular disc.

The present invention relates to an annular disc of bent sheet material with at least one junction at which the annulus is closed, wherein the sheet material is a solder material and wherein the junction is connected by soldering or welding.

Further, the invention regards a method for producing an annular disc, comprising the steps of:
(a) providing a sheet material being a solder material;
(b) bending the sheet material into an annular disc;
(c) severing the sheet material, so that an annular disc with a junction at which the annulus is open is provided;
(d) closing the junction, so that an annular disc with a junction at which the annulus is closed is provided.

Furthermore, the invention relates to a method for producing an annular disc, comprising the steps of:
(i) providing a sheet material being a solder material;
(ii) bending the sheet material into a first part of an annular disc;
(iii) severing the sheet material, so that a first part of an annular disc is provided;
(iv) repeating steps (i), (ii) and (iii) at least once, so that at least one further part of the annular disc is provided; and
(v) connecting the first part and the further parts of the annular disc, so that an annular disc with at least two junctions at which the annulus is closed is provided.

- Figure 1: shows annular discs according to an embodiment of the invention with one, two and three junctions.
- Figure 2: shows a possible device for bending the sheet material.
- Figure 3: shows a further possible device for bending the sheet material.
- Figure 4: shows another embodiment of a device for bending the sheet material.
- Figure 5: shows yet a further possible device for bending the sheet material.
- Figure 6: shows an annular disc according to an embodiment of the invention.

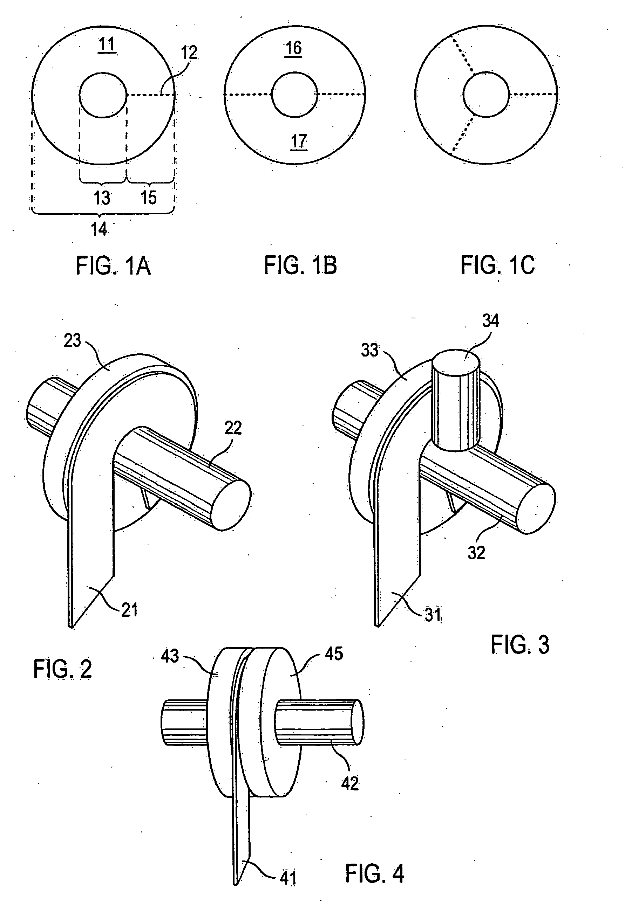

Annular discs according to the invention are shown in Figure 1. In Figure 1A, the annular disc 11 has one junction 12. The annular disc is characterized by an inside diameter 13, an outside diameter 14 and a web width 15. In Figure 1B, a further annular disc according to the invention with two junctions is shown. Although in Figure 1B the first part of the annular disc 16 and the second part of the annular disc 17 are represented as both being of the same size, this is merely preferred. It is likewise possible to assemble the annular disc from parts of different sizes. In Figure 1C, an annular disc according to the invention with three junctions is shown.

The annular discs according to the invention have at least one junction. The number of junctions is not particularly restricted and there are generally one to four junctions. Annular discs with two to four junctions are particularly preferred, more preferred with two junctions, since there is less of a tendency towards bulging and buckling during the bending of parts of annular discs that there is during the bending of complete annular discs which require only one junction.

In the case of both methods according to the invention, firstly a sheet material is provided. The sheet material is generally an elongated material in strip form, the width, thickness and length of which are not particularly restricted. The sheet material has a width which corresponds to the web width of the annular disc to be produced. Typical widths are from 0.5 mm to 15 mm, preferably 2 mm to 10 mm. The thickness of the sheet material likewise corresponds essentially to the desired thickness of the annular disc. It may vary for example from 0.005 mm to 0.30 mm, preferably from 0.15 mm to 0.20 mm. The minimum length of the sheet material is not restricted, provided that the sheet material is at least long enough for an annular disc or part of an annular disc to be formed from it. The maximum length of the sheet material is not restricted, since pieces of the desired length can be obtained from a long strip by severing after bending. The sheet material is generally used as roll stock. However, it is likewise possible to use short strips.

The sheet material is a solder material. With regard to the extensibility of the sheet material, sheet materials with a Vickers hardness of at most HV1 170 are preferably used, more preferably HV1 100 to HV1 150. The Vickers hardness can be measured as specified in DIN 50133.

In a particularly preferred embodiment of the invention, the sheet material consists of a hard solder material. Hard solder materials are, for example, solder materials which have a melting point of at least 450°C. They can be used to produce connections that are sealed with respect to a high vacuum, for example in the case of vacuum interrupters. These soldered connections can withstand high loading and can ensure sealing with respect to a high vacuum of 10⁻⁷ mbar over at least 20 years. Silver-copper based hard solder alloys (such as Ag₇₂Cu₂₈ and Ag_{69.7}Cu₂₈Ge₂Co_{0.3}) and silver-copper-palladium-based hard solder alloys (such as Ag_{68.4}Cu_{26.6}Pd₅, Ag₆₅Cu₂₀Pd₁₅ and Ag₅₄Cu₂₁Pd₂₅) may be mentioned as examples of a hard solder material.

The sheet material provided is bent into an annular disc or part of an annular disc. In a preferred embodiment, as shown in Figure 2, the sheet material 21 is wound on edge around a bar 22. The diameter of the bar should in this case correspond essentially to the inside diameter of the desired annular disc. The diameter of the bar is not particularly restricted and is typically 25 mm to 290 mm, preferably 40 mm to 140 mm.

In order to prevent the annular disc or the part of the Annular disc becoming non-planar during bending, since the sheet material 21 bulges or buckles for example, the sheet material 21 may for example lie on a plate 23 attached to the bar 22 during the bending operation. If required, the contact with the plate may be assisted in various ways. For example, it would be possible to feed the sheet material 21 in at a suitable angle, so that it lies in contact or, as shown in Figure 3, a pressing roller 34 or other corresponding device may be used. A further possible way of guiding the sheet is represented in Figure 4. Here, the sheet material 41 is guided between two circular discs 43 and 45, which are fastened to the bar 42. If appropriate, the guidance of the strip may also be provided by a plate which is not attached to the bar or a device which is separate from the bar. In this embodiment, too, the planarity of the annular disc can be assisted by corresponding further measures or devices.

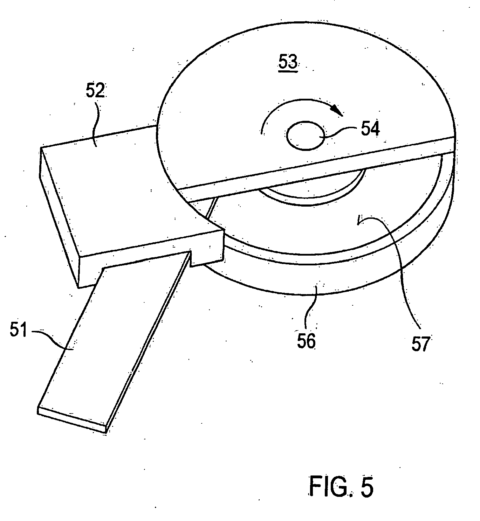

Figure 5 shows a further device for bending the sheet material. The sheet material 51 is fed in by means of a guide 52 in such a way that it is guided in a depression 57 in a lower plate 56. An upper plate 53, which is mounted rotatably about a bar 54, also guides the sheet material.

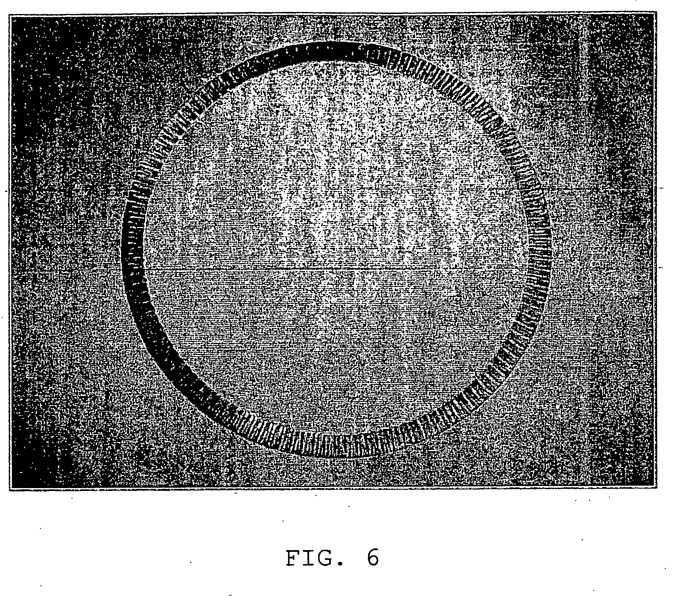

It is possible that, with the method according to the invention, annular discs which have slight bulges transversely to the web width are obtained (Figure 6). These bulges do not adversely influence the use of the annular discs, in particular when they are used as solder material.

After the bending of the annular disc or the first part of the annular disc, the sheet material is severed. In the case of the second method according to the invention, in which the annular disc is made up of a number of parts, the steps (i), (ii) and (iii) described above are subsequently repeated, thereby providing one or more further parts of the annular disc, which can be joined together to form a complete annular disc.

In a final method step, the junction or junctions of the inner disc is or are connected, so that a complete annular disc is provided. The methods for connecting the junctions are not particularly restricted. Generally, the method for connecting the junctions is suitably selected on the basis of the sheet material used. Soldering and welding, in particular resistance welding and laser welding, can be mentioned as possible methods.

An annular disc which has been bent, but the junction of which is not connected, is disadvantageous. Since the junction is not connected, the two ends of the sheet material at the junction can move away from each other during production, mounting or use, so that the annular disc is no longer planar. Moreover, such annular discs are disadvantageous because the opens junction can become hooked with other annular discs, the devices used, storage containers and the like, and the hooked annular disc subsequently has to be laboriously unhooked again manually.

## Claims

1. Annular disc of bent sheet material with at least one junction at which the annulus is closed, wherein the sheet material is a solder material and wherein the junction is connected by soldering or welding.

2. Annular disc according to Claim 1, the annular disc having two junctions at which the annulus is closed.

3. Annular disc according to Claim 1 or 2, the sheet material comprising a metal or a metal alloy.

4. Annular disc according to one of Claims 1 to 3, the sheet material having a Vickers hardness of up to HV 170.

5. Annular disc according to one of Claims 1 to 4, the solder material being a hard solder material.

6. Annular disc according to Claim 5, the hard solder material being selected from silver-copper-based and silver-copper-palladium-based hard solder alloys.

7. Annular disc according to Claim 6, the hard solder material being selected from Ag₇₂Cᵤ₂₈, Ag_{69.7}Cu₂₈Ge₂Co_{0.3}, Ag_{68.4}Cu_{26.6}Pd₅, Ag₆₅Cu₂₀Pd₁₅ and Ag₅₄Cu₂,Pd₂₅.

8. Method for producing an annular disc, comprising the steps of:
(a) providing a sheet material being a solder material;
(b) bending the sheet material into an annular disc;
(c) severing the sheet material, so that an annular disc with a junction at which the annulus is open is provided; and
(d) closing the junction, so that an annular disc with a junction at which the annulus is closed is provided.

9. Method for producing an annular disc, comprising the steps of:
(i) providing a sheet material being a solder material;
(ii) bending the sheet material into a first part of an annular disc;
(iii) severing the sheet material, so that a first part of an annular disc is provided;
(iv) repeating steps (i), (ii) and (iii) at least once, so that at least one further part of the annular disc is provided; and
(v) connecting the first part and the further parts of the annular disc, so that an annular disc with at least two junctions at which the annulus is closed is provided.

10. Method according to Claim 9, the first part of the annular disc and the at least one further part of the annular disc in each case being half annular discs.

11. Method according to Claim 8 or 9, the junction being connected by soldering or welding.

12. Method according to Claim 11, the welding being selected from resistance welding and laser welding.

13. Method according to one of Claims 8 to 12, the sheet material having a width of from 0.5 to 15 mm.

14. Method according to one of Claims 8 to 13, the bending of the sheet material into an annular disc or part of an annular disc being carried out by the sheet material being wound on edge around a bar.

## Patentansprüche

1. Ringscheibe aus gebogenem Bandmaterial mit mindestens einer Verbindungsstelle, an der der Ring geschlossen ist, wobei das Bandmaterial ein Lotmaterial ist und wobei die Verbindung durch Löten oder Schweißen verbunden ist.

2. Ringscheibe nach Anspruch 1, wobei die Ringscheibe zwei Verbindungsstellen aufweist, an die der Ring geschlossen ist.

3. Ringscheibe nach Anspruch 1 oder 2, wobei das Bandmaterial ein Metall oder eine metallische Legierung umfasst.

4. Ringscheibe nach einem der Ansprüche 1 bis 3, wobei das Bandmaterial eine Vickers-Härte von bis zu HV1 170 aufweist.

5. Ringscheibe nach einem der Ansprüche 1 bis 4, wobei das Lotmaterial ein Hartlotmaterial ist.

6. Ringscheibe nach Anspruch 5, wobei das Hartlotmaterial aus Hartlotlegierungen auf Silber-Kupfer-Basis und Silber-Kupfer-Palladium-Basis ausgewählt ist.

7. Ringscheibe nach Anspruch 6, wobei das Hartlotmaterial aus Ag₇₂Cu₂₈, Ag_{69,7}Cu₂₈Ge₂Co_{0,3}, Ag_{68,4}Cu_{26,6}Pd₅, Ag₆₅Cu₂₀Pd₁₅ und A₉₅₄Cu₂₁Pd₂₅ ausgewählt ist.

8. Verfahren zur Herstellung einer Ringscheibe, umfassend die Schritte:
(a) Bereitstellen eines Bandmaterials, welches ein Lotmaterial ist;
(b) Biegen des Bandmaterials zu einer Ringscheibe;
(c) Durchtrennen des Bandmaterials, so dass eine Ringscheibe mit einer Verbindungsstelle, an der der Ring offen ist, bereitgestellt wird; und
(d) Schließen der Verbindungsstelle, so dass eine Ringscheibe mit einer Verbindungsstelle, an der der Ring geschlossen ist, bereitgestellt wird.

9. Verfahren zur Herstellung einer Ringscheibe, umfassend die Schritte:
(i) Bereitstellen eines Bandmaterials, welches ein Lotmaterial ist;
(ii) Biegen des Bandmaterials zu einem ersten Teil einer Ringscheibe;
(iii) Durchtrennen des Bandmaterials, so dass ein erstes Teil einer Ringscheibe bereitgestellt wird;
(iv) mindestens einmaliges Wiederholen der Schritte (i), (ii) und (iii), so dass mindestens ein weiteres Teil der Ringscheibe bereitgestellt wird; und
(v) Verbinden des ersten und der weiteren Teile der Ringscheibe, so dass eine Ringscheibe mit mindestens zwei Verbindungsstellen, an denen der Ring geschlossen ist, bereitgestellt wird.

10. Verfahren nach Anspruch 9, wobei das erste Teil der Ringscheibe und das mindestens eine weitere Teil der Ringscheibe jeweils halbe Ringscheiben sind.

11. Verfahren nach Anspruch 8 oder 9, wobei die Verbindungsstelle durch Löten oder Schweißen verbunden wird.

12. Verfahren nach Anspruch 11, wobei das Schweißen aus Widerstandsschweißen und Laserschweißen ausgewählt ist.

13. Verfahren nach einem der Ansprüche 8 bis 12, wobei das Bandmaterial eine Breite von 0,5 bis 15 mm aufweist.

14. Verfahren nach einem der Ansprüche 8 bis 13, wobei das Biegen des Bandmaterials zu einer Ringscheibe bzw. einem Teil einer Ringscheibe durchgeführt wird, in dem das Bandmaterial an der Schmalkante um einen Stab gewickelt wird.

## Revendications

1. Disque annulaire formé d'une matière en feuille, cintrée, ayant au moins une jonction qui ferme l'anneau, la matière en feuille étant une matière de brasage et la jonction étant réalisée par brasage ou soudage.

2. Disque annulaire selon la revendication 1, ayant deux jonctions auxquelles l'anneau est fermé.

3. Disque annulaire selon la revendication 1 ou 2,
selon lequel
la matière en feuille comprend un métal ou un alliage métallique.

4. Disque annulaire selon l'une quelconque des revendications 1 à 3,
selon lequel
la matière en feuille a une dureté Vickers allant jusqu'à HV1 170.

5. Disque annulaire selon l'une quelconque des revendications 1 à 4,
selon lequel
la matière de brasage est une matière de brasage fort.

6. Disque annulaire selon la revendication 5,
selon lequel
la matière de brasage fort est choisie parmi les alliages de brasage fort à base d'argent-cuivre et argent-cuivre-palladium.

7. Disque annulaire selon la revendication 6,
**caractérisé en ce que**
la matière de brasage fort est choisie parmi les matières suivantes: Ag₇₂Cu₂₈, Ag_{69.7}Cu₂₈Ge₂CO_{0,3}, Ag_{68,4}Cu_{26,6}Pd₅, Ag₆₅Cu₂₀Pd₁₅ et Ag₅₄Cu₂₁Pd₂₅.

8. Procédé de réalisation d'un disque annulaire comprenant les étapes suivantes :
(a) on fournit une matière en feuille qui est une matière de brasage,
(b) on cintre la matière en feuille pour former un disque annulaire,
(c) on coupe la matière en feuille pour obtenir un disque annulaire avec une jonction laissant l'anneau ouvert, et
(d) on ferme la jonction de façon à obtenir un disque annulaire avec une jonction à laquelle l'anneau est fermé.

9. Procédé de fabrication d'un disque annulaire comprenant les étapes suivantes :
(i) on fournit une matière en feuille qui est une matière de brasage,
(ii) on cintre la matière en feuille pour obtenir une première partie de disque annulaire,
(iii) on coupe la matière en feuille pour obtenir une première partie d'un disque annulaire,
(iv) on répète les étapes (i), (ii) et (iii) au moins une fois, de façon à obtenir au moins une autre partie du disque annulaire, et
(v) on relie la première partie et les autres parties du disque annulaire pour obtenir un disque annulaire ayant au moins deux jonctions auxquelles l'anneau est fermé.

10. Procédé selon la revendication 9,
selon lequel
la première partie du disque annulaire et l'au moins une autre partie du disque annulaire sont dans chaque cas des demi-disques annulaires.

11. Procédé selon la revendication 8 ou 9,
selon lequel
la jonction est reliée par brasage ou soudage.

12. Procédé selon la revendication 11,
selon lequel
le soudage est choisi parmi le soudage par résistance et le soudage par laser.

13. Procédé selon l'une quelconque des revendications 8 à 12,
selon lequel
la matière en feuille a une épaisseur de 0,5 mm à 15 mm.

14. Procédé selon l'une quelconque des revendications 8 à 13,
selon lequel
le cintrage de la matière en feuille pour obtenir un disque annulaire ou une partie de disque annulaire est réalisé en enroulant la matière en feuille autour du bord d'une barre.
